# EUROPÄISCHE PATENTANMELDUNG

(11) **EP 3 926 196 A1**
(43) Veröffentlichungstag der Anmeldung: **22.12.2021**
(21) Anmeldenummer: 20181091.8
(22) Anmeldetag: 19.06.2020
(51) Int. Cl.: F16D 3/18

(54) **DOPPELGELENKKUPPLUNG, DREHGESTELL, SCHIENENFAHRZEUG, INDUSTRIE-APPLIKATION UND COMPUTERPROGRAMMPRODUKT**

(71) Anmelder: Flender GmbH, 46395 Bocholt (DE)
(72) Erfinder: Jansen, Andre, 46325 Borken (DE); Schnucklake, Michael, 46399 Bocholt (DE)
(74) Vertreter: Michalski Hüttermann & Partner Patentanwälte mbB

(57) **Zusammenfassung**

Die Erfindung betrifft eine Doppelgelenkkupplung (10), umfassend eine Ritzelhohlwelle (20), die mit einer Innenverzahnung (52) verbunden ist, und eine Zwischenwelle (30), die mit einer Kupplungsverzahnung (34) zu einem Eingriff in die Innenverzahnung (52) verbunden ist, wobei die Kupplungsverzahnung (34) an der Zwischenwelle (30) zu einem Durchführen durch die Ritzelhohlwelle (20) ausgebildet ist.

## Beschreibung

Die Erfindung betrifft eine Doppelgelenkkupplung und ein Verfahren zu einer Montage einer Doppelgelenkkupplung. Die Erfindung betrifft auch Drehgestell eines Schienenfahrzeugs mit einer solchen Doppelgelenkkupplung und ein dementsprechendes Schienenfahrzeug selbst. Ferner betrifft die Erfindung ein Computerprogrammprodukt zur Simulation eines Betriebsverhaltens einer solchen Doppelgelenkkupplung und eine Industrie-Applikation, die mit einer erfindungsgemäßen Doppelgelenckupplung ausgestattet ist.

Die Druckschrift EP 2 457 795 A1 offenbart eine Kupplungsvorrichtung zur Verbindung eines antreibenden Maschinenteils mit einen angetriebenen Maschinenteil. Die Kupplungsvorrichtung umfasst eine Zahnkupplung und eine Gelenkhebelkupplung. Die Zahnkupplung ist mit einer Hohlwelle verbunden, durch die sich im montierten Zustand eine Welle erstreckt, die mit einer Außenverzahnung der Zahnkupplung und einem Anschlussflansch für Lamellen verbunden ist. Zu einer Montage der Kupplungsvorrichtung ist die Welle zwischen der Zahnkupplung und der Gelenkhebelkupplung teilbar ausgebildet.

Die Internationale Patentanmeldung WO 2007/036219 A1 zeigt eine Kardanische Doppelgelenkkupplung für Schienenfahrzeuge, die eine Ritzelhohlwelle umfasst, durch die sich eine Zwischenwelle erstreckt. Die Zwischenwelle ist an einem Ende lösbar mit einer außenverzahnten Kupplungsnabe einer Zahnkupplung verbunden.

Doppelgelenkkupplungen werden in unterschiedlichen Anwendungen eingesetzt und sind Beanspruchungen unterworfen, die eine Inspektion der Kupplungen erforderlich machen. Ferner besteht der Wunsch nach Kupplungen, die einfach und kosteneffizient herstellbar sind und gleichzeitig ein hohes Ausgleichsvermögen gegen Auslenkungen. Dies gilt insbesondere für industrielle Anwendungen oder Schienenfahrzeuge. Der Erfindung liegt die Aufgabenstellung zugrunde, eine Doppelgelenkkupplung bereitzustellen, die in zumindest einem der skizzierten Punkte eine Verbesserung bietet.

Die Aufgabenstellung wird durch eine erfindungsgemäße Doppelgelenkkupplung gelöst. Die Doppelgelenkkupplung umfasst eine Ritzelhohlwelle, die mit einer Innenverzahnung verbunden ist, so dass eine Drehung der Ritzelhohlwelle auf die Innenverzahnung übertragbar ist. Die Doppelgelenkkupplung umfasst auch eine Zwischenwelle, die mit einer Kupplungsverzahnung verbunden ist, so dass eine Drehung der Zwischenwelle auf die Kupplungsverzahnung übertragbar ist. Die Kupplungsverzahnung ist zu einem Eingriff in die Innenverzahnung an der Ritzelhohlwelle ausgebildet, so dass an einem Ende der Ritzelhohlwelle eine Zahnkupplung ausgebildet ist. Dementsprechend ist über die Zahnkupplung eine Drehung der Ritzelhohlwelle auf die Zwischenwelle übertragbar. Erfindungsgemäß ist die Kupplungsverzahnung, die mit der Zwischenwelle verbunden ist, zu einem Durchführen durch die Ritzelhohlwelle ausgebildet. Dazu weist die Kupplungsverzahnung einen Außendurchmesser auf, der geringer ist als ein Innendurchmesser der Ritzelhohlwelle. Dies erlaubt es, bei einer die Zwischenwelle separat mit weiteren Komponenten zu versehen und die Zwischenwelle als komplette Baugruppe zu handhaben. Ferner erfordert die weitere Montage der Doppelgelenkkupplung eine reduzierte Anzahl an Bauteilen und Montageschritten. Darüber hinaus ist die erfindungsgemäße Doppelgelenkkupplung durch ein Auseinanderziehen der Zwischenwelle und der Ritzelhohlwelle schnell in ihre größten Baugruppen zerlegbar. Dadurch wird eine Wartung oder Reparatur der Doppelgelenkkupplung vereinfacht.

In einer Ausführungsform der beanspruchten Doppelgelenkkupplung ist die Kupplungsverzahnung mit der Zwischenwelle einstückig ausgebildet, also nicht zerstörungsfrei voneinander trennbar. Die Kupplungsverzahnung kann aus demselben Werkstück wie die Zwischenwelle hergestellt sein, wodurch die Anzahl an Bauteilen in der beanspruchten Doppelgelenkkupplung weiter reduziert wird. Alternativ können die Kupplungsverzahnung und die Zwischenwelle auch formschlüssig miteinander verbunden sein, beispielsweise mittels Schweißens. Durch die Einstückigkeit der Kupplungsverzahnung mit der Zwischenwelle werden eine erhöhte Kosteneffizenz und ein hohes Maß an Modularität erzielt, der Bearbeitungsaufwand minimiert, sowie die Wartungsfreundlichkeit der Doppelgelenkkupplung weiter gesteigert.

Des Weiteren kann in einem Bereich der Kupplungsverzahnung an der Zwischenwelle ein Anlaufring angeordnet sein. Der Anlaufring weist dabei einen Außendurchmesser auf, der geringer ist als der Innendurchmesser der Ritzelhohlwelle. Der Anlaufring ist dadurch zusammen mit der Zwischenwelle durch die Ritzelhohlwelle durchführbar. Der Anlaufring erlaubt es, im montierten Zustand eine Dichtung zwischen der Zahnkupplung und der Ritzelhohlwelle bereitzustellen und so einen Verlust von Betriebsmitteln, beispielsweise Schmierstoff, zu verringern. Zum Bereitstellen der Dichtung kann an einer Außenfläche des Anlaufrings zumindest ein Dichtungselement angeordnet werden, beispielsweise ein O-Ring. Dazu kann an der Außenfläche des Anlaufrings beispielsweise eine umlaufende Nut ausgebildet sein. In Abhängigkeit von einer Axialposition des zumindest einen Dichtungselements ist der Anlaufring dazu ausgebildet, eine Dichtung zwischen der Zwischenwelle und der Ritzelhohlwelle bzw. einem Mitnehmerring herzustellen. Dazu sind der Innendurchmesser der Ritzelhohlwelle und der Außendurchmesser des Anlaufrings derart gewählt, dass zwischen diesen ein Ringraum mit einer Montagespaltbreite ausbildbar ist, die geringer ist als eine Radialabmessung eines unbelasteten Dichtungselements. Eine derartige Montagespaltbreite ist in einfacher Weise durch entsprechende Dimensionierung des Außendurchmessers der Kupplungsverzahnung und des Innendurchmessers der Ritzelhohlwelle einstellbar. Insbesondere ist eine Alternativ oder ergänzend kann an der Außenfläche ein Sicherungsring angeordnet sein, durch den eine Axialbewegung der Zwischenwelle abstützbar, also begrenzbar, ist. Dadurch wird ein Endanschlag für die Kupplungsverzahnung bereitgestellt. Ebenso erlaubt der Sicherungsring eine sichere Montage. Unter einer Axialbewegung bzw. einer Axialposition ist hierbei eine Bewegung bzw. Position entlang einer Drehachse der Zwischenwelle und der Ritzelhohlwelle zu verstehen.

Darüber hinaus kann am Anlaufring an einer Innenfläche zumindest ein Dichtungselement angeordnet sein. Dadurch ist zwischen der Zwischenwelle und dem Anlaufring eine Dichtung herstellbar. Das Dichtungselement kann dazu beispielsweise als O-Ring ausgebildet sein, der in einer umlaufenden Nut an der Innenfläche des Anlaufrings aufgenommen ist. Auch dadurch ist ein Verlust an Betriebsmitteln, beispielsweise ein Austritt von Schmierstoff aus der Zahnkupplung, reduzierbar. In einer weiteren Ausführungsform der beanspruchten Doppelgelenkkupplung weist das Dichtungselement zwei Dichtlippen auf. Derartige Dichtungselemente werden auch als Duo-Dichtringe bezeichnet und bieten eine gesteigerte Dichtwirkung.

In einer weiteren Ausführungsform der beanspruchten Doppelgelenkkupplung ist der Anlaufring zu einem axialen Abstützen an der Ritzelhohlwelle ausgebildet. Dazu weist der Anlaufring einen Außendurchmesser auf, der größer ist als der Innendurchmesser der Ritzelhohlwelle. Dadurch ist eine Axialbewegung der Zwischenwelle abstützbar und ein zusätzlicher Sicherungsring hierzu ist entbehrlich. Somit weist die beanspruchte Doppelgelenkkupplung eine reduzierte Anzahl von Bauteilen auf.

Ferner kann der Mitnehmerring, an dem die Innenverzahnung angeordnet ist, lösbar mit der Ritzelhohlwelle verbunden sein. Der Mitnehmerring ist dazu im Wesentlichen als eine Einfassung ausgebildet, in der die Innenverzahnung lösbar angeordnet ist oder einstückig mit dieser ausgebildet ist. Die Innenverzahnung ist durch den Mitnehmerring von der beanspruchten Doppelgelenkkupplung trennbar und separat untersuchbar und reparierbar. Ebenso kann der Mitnehmerring separat gefertigt werden. Dadurch wird der Fertigungsaufwand für die beanspruchte Doppelgelenkkupplung verringert. Bei einer Demontage der beanspruchten Doppelgelenkkupplung kann durch ein Lösen des Mitnehmerrings von der Ritzelhohlwelle eine Drehmomentübertragung von der Ritzelhohlwelle auf die Zwischenwelle unterbrochen werden. Durch eine solche Unterbrechung der Drehmomentübertragung werden Komponenten in der Doppelgelenckupplung selbst, beispielsweise die Zwischenwelle, oder in einem Antriebsstrang, zu der die Doppelgelenkkupplung gehört, freigängig. Der Mitnehmerring ist in einem frühen Stadium einer Demontage von der Ritzelhohlwelle lösbar, so dass die Demontage insgesamt in einem frühen Stadium erleichtert wird. Daher bietet die beanspruchte Doppelgelenkkupplung ein hohes Maß an Wartungsfreundlichkeit. Alternativ kann der Mitnehmerring einstückig mit der Ritzelhohlwelle ausgebildet sein und eine Innenverzahnung aufweisen. Durch einen Mitnehmerring, der einstückig mit der Ritzelhohlwelle ausgebildet ist, wird das Konzept der Modularität weiter verwirklicht und durch Verringerung der Anzahl an Bauteilen der Montageaufwand reduziert.

Des Weiteren kann die Zwischenwelle in der beanspruchten Doppelgelenkkupplung mit einem Lamellenflansch ausgebildet sein. Der Lamellenflansch ist dabei an einem der Zahnkupplung abgewandten Ende der Zwischenwelle angeordnet. Der Lamellenflansch ist mit Lamellenpaketen verbindbar, so dass neben der Zahnkupplung als erste Gelenkebene dort eine zweite Gelenkebene herstellbar ist. Der Lamellenflansch kann dazu aus demselben Werkstück wie die Zwischenwelle hergestellt sein. Alternativ kann der Lamellenflansch auch stoffschlüssig mit der Zwischenwelle verbunden sein, beispielsweise durch Schweißen. Durch die Einstückigkeit zwischen dem Lamellenflansch und der Zwischenwelle sind diese nicht zerstörungsfrei voneinander trennbar. Dadurch ist der Lamellenflansch insgesamt einfach, schnell und wirtschaftlich herstellbar. Ferner ist der Lamellenflansch mit Montagebohrungen verstehen, die es erlauben, die Zwischenwelle während der Montage an der Ritzelhohlwelle zu befestigen. Dadurch ist die Montage der beanspruchten Doppelgelenkkupplung gezielt unterbrechbar. Alternativ kann die Zwischenwelle auch einstückig mit einer weiteren Kupplungsverzahnung versehen sein, durch die eine weitere Zahnkupplung hergestellt wird.

In einer weiteren Ausführungsform der beanspruchten Doppelgelenkkupplung ist die Zwischenwelle als Hohlwelle ausgebildet. Dies erlaubt eine gewichtsparende Bauweise für die Zwischenwelle und eine Reduzierung von Trägheitsmoment. Ebenso ist der lichte Raum in der Hohlwelle zur Durchführung von Werkzeugen, beispielsweise für eine Zentralschraube, nutzbar.

Die zugrundeliegende Aufgabenstellung wird auch durch ein erfindungsgemäßes Verfahren zur Montage einer Doppelgelenkkupplung gelöst. Die Doppelgelenkkupplung umfasst eine Ritzelhohlwelle, eine Zwischenwelle mit einer Kupplungsverzahnung, einen Anlaufring und einen Mitnehmerring, die durch das erfindungsgemäße Verfahren zu montieren sind. In einem ersten Schritt erfolgt ein Bereitstellen der Ritzelhohlwelle, die dazu in geeigneter Form gehalten oder befestigt wird. In einem darauffolgenden zweiten Schritt erfolgt ein Durchführen der Zwischenwelle durch die Ritzelhohlwelle. Dabei wird die Zwischenwelle in Richtung der daran ausgebildeten Kupplungsverzahnung von einem Ende der Ritzelhohlwelle zum gegenüberliegenden Ende geschoben. Nach dem Durchführen der Zwischenwelle überragt die Kupplungsverzahnung die Ritzelhohlwelle in Axialrichtung zumindest teilweise. In einem anschließenden dritten Schritt erfolgt ein Anbringen von mindestens einem Dichtungselement und/oder einem Sicherungselement an einer Außenfläche eines Anlaufrings, der an der Zwischenwelle angeordnet ist. Das zumindest eine Dichtungselement kann als O-Ring ausgebildet sein und eine Dichtung zwischen dem Anlaufring, und damit der Zwischenwelle, und der Ritzhohlwelle herstellen. Das Sicherungselement kann beispielsweise als Sicherungsring ausgebildet sein, der zu einem Abstützen einer Axialbewegung der Zwischenwelle geeignet ist. In einem weiteren vierten Schritt erfolgt ein Befestigen eines Mitnehmerrings an der Ritzelhohlwelle. Der Mitnehmerring weist eine Innenverzahnung auf, die zu einem Eingriff mit der Kupplungsverzahnung ausgebildet ist. Durch das Befestigen des Mitnehmerrings an der Ritzelhohlwelle wird der Eingriff zwischen der Kupplungsverzahnung und der Innenverzahnung hergestellt und somit eine Zahnkupplung verwirklicht. Dementsprechend wird eine Drehmomentübertragung von der Ritzelhohlwelle auf die Zwischenwelle ermöglicht und so die Hauptfunktionalität der Doppelgelenkkupplung bereitgestellt.

Die Ritzelhohlwelle und die Zwischenwelle stellen die schwersten Komponenten der erfindungsgemäßen Doppelgelenckupplung dar. Im erfindungsgemäßen Verfahren wird die Anzahl an Montageschritten, in denen diese Komponenten zu handhaben sind, dementsprechend auf ein Minimum reduziert. Das Anbringen des mindestens einen Dichtungselements und/oder Sicherungselements ist, sobald die Zwischenwelle durch die Ritzelhohlwelle hindurchgeführt ist, einfach durchführbar. Des Weiteren ist zum Bereitstellen der Drehmomentübertragung zwischen der Ritzelhohlwelle und der Zwischenwelle mit dem Mitnehmerring eine relativ leichte Komponente zu handhaben. Die Innenverzahnung und/oder der Mitnehmerring sind durch entsprechende Toleranzen anpassbar, um eine einfache Montage im beschriebenen dritten Schritt zu gewährleisten. Hierdurch wird insgesamt die Montage der skizzierten Doppelgelenkkupplung beschleunigt und vereinfacht, und somit auch ein erhöhtes Maß Wartungsfreundlichkeit erzielt. Das erfindungsgemäße Verfahren kann, bei umgekehrter Reihenfolge in der Abfolge der skizzierten Schritte, auch zu einem Verfahren zur Demontage einer entsprechenden Doppelgelenkkupplung weitergebildet werden.

In einer Ausführungsform des beanspruchten Verfahrens wird der Anlaufring im ersten Schritt an der Zwischenwelle angebracht werden. Der Anlaufring kann als geteilter Ring ausgebildet sein, der beim Anbringen auf der Zwischenwelle zusammengesetzt wird. Der Anlaufring wird hierbei im Bereich der Kupplungsverzahnung, also im Wesentlichen benachbart zu dieser, an der Zwischenwelle befestigt und zusammen mit der Kupplungsverzahnung im zweiten Schritt durch die Ritzelhohlwelle geführt. Alternativ kann der Anlaufring unmittelbar nach dem zweiten Schritt, also wenn die Kupplungsverzahnung durch die Ritzelhohlwelle durchgeführt ist, an der Zwischenwelle angebracht werden. Auch dazu kann der Anlaufring als geteilter Ring ausgebildet sein, der beim Anbringen an der Zwischenwelle zusammengesetzt wird.

Ebenso wird die Aufgabenstellung durch ein erfindungsgemäßes Drehgestell für ein Schienenfahrzeug gelöst. Das Drehgestellt umfasst einen Fahrmotor, der drehmomentübertragend mit Doppelgelenkkupplung verbunden ist. Die Doppelgelenkkupplung wiederum ist drehmomentübertragend über ein Getriebe mit einer Achse oder einem Rad des Schienenfahrzeugs verbunden. Erfindungsgemäß ist die Doppelgelenkkupplung gemäß einer der oben dargestellten Ausführungsformen ausgebildet. Durch die erfindungsgemäße Doppelgelenkkupplung wird die Herstellung, Wartung und Reparatur des Drehgestells vereinfacht. Insbesondere Ist die Doppelgelenkkupplung nach einem der oben beschriebenen Verfahren montierbar und/oder demontierbar.

Gleichermaßen wird die skizzierte Aufgabenstellung durch ein erfindungsgemäßes Schienenfahrzeug gelöst, das einen Wagenkasten umfasst, an dem mindestens ein Drehgestell angebracht ist. Unter einem Schienenfahrzeug ist dabei jegliches motorisierte Fahrzeug zu einer Fortbewegung mittels eines Rad-Schiene-Systems zu verstehen. Das Schienenfahrzeug kann beispielsweise als Lokomotive, Triebwagen, Triebzug, Einschienenbahn, Hängebahn, U-Bahn, S-Bahn oder Straßenbahn ausgebildet sein. Das Drehgestell ist hierbei gemäß einer der oben beschriebenen Ausführungsformen ausgebildet. Der Betrieb derartiger Schienenfahrzeuge wird durch Verwendung des erfindungsgemäßen Drehgestells effizienter, da durch die erhöhte Wartungsfreundlichkeit des Drehgestells Ausfallzeiten reduziert werden können.

Ferner wird die zugrundeliegende Aufgabenstellung durch eine erfindungsgemäße Industrie-Applikation gelöst, die eine Antriebseinheit umfasst, die mit einer Abtriebseinheit drehmomentübertragend verbunden ist. Die Antriebseinheit kann beispielsweise als Elektromotor, Verbrennungsmotor oder Hydraulikmotor ausgebildet sein kann. Durch die Antriebseinheit wird über eine Ausgangswelle eine Antriebsleistung bereitgestellt, die zur Abtriebseinheit zu übertragen ist. Die Antriebseinheit kann beispielsweise als Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse oder Schrottpresse ausgebildet sein. Die Abtriebseinheit weist hierzu eine Eingangswelle auf, die über eine Kupplung mit der Ausgangswelle der Antriebseinheit verbunden ist. Die Kupplung ist erfindungsgemäß nach einer der oben skizzierten Ausführungsformen ausgebildet.

Ebenso wird die skizzierte Aufgabenstellung durch ein erfindungsgemäßes Computerprogrammprodukt gelöst, das zu Simulation eines Betriebsverhaltes einer Doppelgelenkkupplung ausgebildet ist. Unter dem Betriebsverhalten ist beispielweise ein Biegeverhalten oder Verschleißverhalten einzelner Komponenten zu verstehen. Auch eine Kinematik und/oder eine Schwingungscharakteristik der Doppelgelenkkupplung können mittels des Computerprogrammprodukts simuliert werden. Das Betriebsverhalten der Doppelgelenkkupplung ist dadurch in einem montierten Zustand in einem Schienenfahrzeug simulierbar. Dies kann sowohl einen Fahrbetrieb als auch einen Wartungsbetrieb umfassen. Die Doppelgelenkkupplung ist dementsprechend in ihrem physikalischen Verhalten im erfindungsgemäßen Computerprogrammprodukt abgebildet und kann mit einer Datenschnittstelle versehen sein, durch die weitere simulationsgerichtete Computerprogrammprodukte Eingabewerte an das erfindungsgemäße Computerprogrammprodukt weitergeben können. Gleichermaßen kann das Computerprogrammprodukt auch mit einer Datenschnittstelle zu einem Weitergeben von Ausgabewerten des erfindungsgemäßen Computerprogrammprodukts an weitere simulationsgerichtete Computerprogrammprodukte versehen sein. Das Computerprogrammprodukt kann als sogenannter Digitaler Zwilling ausgebildet sein. Derartige Digitalen Zwillinge sind beispielsweise in der Offenlegungsschrift US 2017/286572 A1 dargestellt. Der Offenbarungsgehalt von US 2017/286572 A1 wird durch Verweisung in die vorliegende Anmeldung mit einbezogen. Erfindungsgemäß ist die Doppelgelenkkupplung, die durch das beanspruchte Computerprogrammprodukt simulierbar ist, gemäß einer der oben skizzierten Ausführungsformen ausgebildet.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch eine erste Ausführungsform der beanspruchten Doppelgelenkkupplung während eines Stadiums des beanspruchten Herstellungsverfahrens;
- FIG 2: schematisch die erste Ausführungsform der beanspruchten Doppelgelenkkupplung während eines weiteren Stadiums des beanspruchten Herstellungsverfahrens;
- FIG 3: schematisch die erste Ausführungsform der beanspruchten Doppelgelenkkupplung während eines weiteren Stadiums des beanspruchten Herstellungsverfahrens;
- FIG 4: schematisch die erste Ausführungsform der beanspruchten Doppelgelenkkupplung während eines weiteren Stadiums des beanspruchten Herstellungsverfahrens;
- FIG 5: in einem Längsschnitt die erste Ausführungsform der beanspruchten Doppelgelenkkupplung im montierten Zustand;
- FIG 6: in einem Längsschnitt eine zweite Ausführungsform der beanspruchten Doppelgelenkkupplung im montierten Zustand;
- FIG 7: schematisch den Aufbau einer Ausführungsform des beanspruchten Schienenfahrzeugs;
- FIG 8: schematisch den Aufbau einer Ausführungsform der beanspruchten Industrie-Applikation.

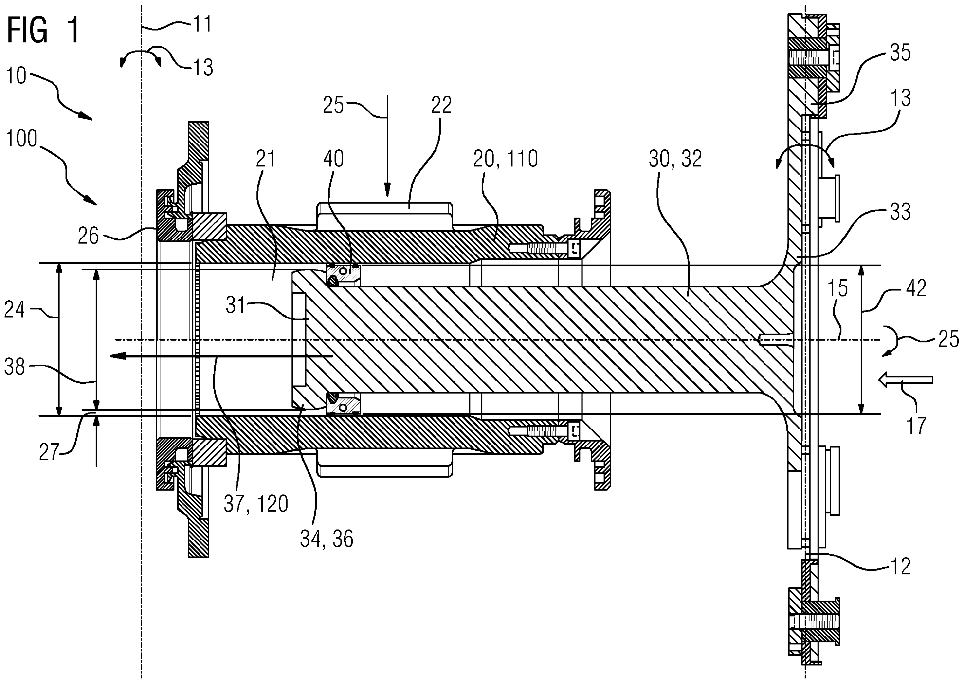

In FIG 1 ist schematisch eine erste Ausführungsform der beanspruchten Doppelgelenkkupplung 10 in einem Längsschnitt in einem Stadium des beanspruchten Verfahrens 100 dargestellt. FIG 1 geht davon aus, dass ein erster Schritt 110, in dem eine Ritzelhohlwelle 20 bereitgestellt wird, bereits abgeschlossen ist und auf einer Zwischenwelle 30 ein Anlaufring 40 befestigt ist. Gemäß FIG 1 wird ein zweiter Schritt 120 durchgeführt, in dem die Zwischenwelle 30 durch die Ritzelhohlwelle 20 hindurchgeführt wird. Hierzu weist die Ritzelhohlwelle 20 einen lichten Innenraum 21 auf. Die Bewegung des Durchführens ist in FIG 1 mit dem Pfeil 37 versinnbildlicht. Die Ritzelhohlwelle 20 weist eine Ritzelverzahnung 22 auf, über die Drehmoment 25 in die Ritzelhohlwelle 20 einleitbar ist und durch das Drehmoment 25 eine Drehung der Ritzelhohlwelle 20 und der Zwischenwelle 30 um eine Drehachse 15 hervorrufbar ist. Die Zwischenwelle 30 weist einen Wellenabschnitt 32 auf, der ein erstes Ende 31 aufweist, an dem eine Kupplungsverzahnung 34 ausgebildet ist. Die Kupplungsverzahnung 34 ist eine Bogenverzahnung 36 und ist einstückig mit dem Wellenabschnitt 32 ausgebildet. Durch die Bogenverzahnung 36 kann am ersten Ende 31 der Zwischenwelle 30 in einer ersten Gelenkebene 11 eine Kippbewegung 13 zwischen der Ritzelhohlwelle 20 und der Zwischenwelle 30 erfolgen. Die Kupplungsverzahnung 34 weist einen Außendurchmesser 38 auf, der geringer ist als ein Innendurchmesser 24 der Ritzelhohlwelle 20. Dementsprechend liegt zwischen der Kupplungsverzahnung 34 und der Ritzelhohlwelle 20 ein Wandabstand 27 vor, der das Durchführen 37 der Zwischenwelle 30 durch die Ritzelhohlwelle 20 in Richtung eines Montageflanschs 26 erlaubt. Auch der Anlaufring 40, der an der Zwischenwelle 30 am Wellenabschnitt 32, entlang der Drehachse 15 betrachtet, im Bereich der Kupplungsverzahnung 34 angeordnet ist, weist einen Außendurchmesser 42 auf, der geringer ist als der Innendurchmesser 24 der Ritzelhohlwelle 20. Der Anlaufring 40 ist als geteilter Ring ausgebildet, dessen Teile in Radialrichtung zusammengefügt werden und der im montierten Zustand durch die Ritzelhohlwelle 20 hindurchführbar ist. Zum Hindurchführen 37 ist an einem Lamellenflansch 35 an einem zweiten Ende 33 der Zwischenwelle 30 eine Axialkraft 17 ausübbar. Der Lamellenflansch 35 gehört zu einer nicht näher dargestellten Lamellenkupplung, durch die in einer zweiten Gelenkebene 12 im Bereich des zweiten Endes 33 der Zwischenwelle 30 eine Kippbewegung 13 möglich ist.

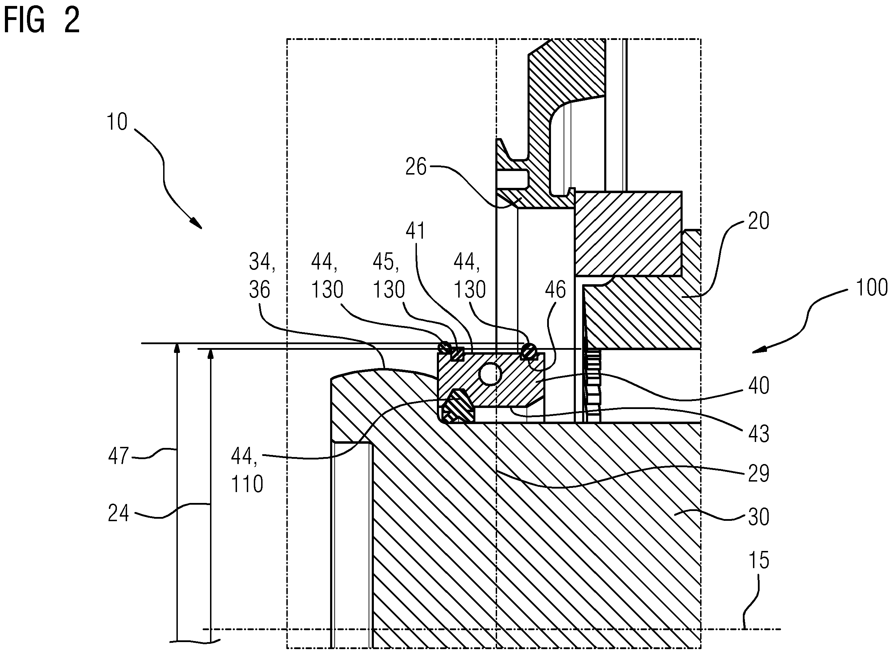

FIG 2 zeigt schematisch die erste Ausführungsform der beanspruchten Doppelgelenkkupplung 10 in einer längsgeschnittenen Detailansicht in einem weiteren Stadium, das im beanspruchten Verfahren 100 auf das Stadium gemäß FIG 1 folgt. Die Zwischenwelle 30 ist soweit durch die Ritzelhohlwelle 20 hindurchgeführt, dass die Kupplungsverzahnung 34 aus der Ritzelhohlwelle 20 herausragt. Der Anlaufring 40, der im Bereich der Kupplungsverzahnung 34 auf der Zwischenwelle 30 angeordnet ist, ragt entlang der Drehachse 15 zumindest teilweise über eine Montageebene 29 am Montageflansch 26. Der Anlaufring 40 weist an einer Innenseite 43 eine umlaufende Nut 46 auf, in der ein Dichtungselement 44 aufgenommen ist, das in Radialrichtung, also im Wesentlichen senkrecht zur Drehachse 15, elastisch verformbar ist und damit zu einem Zentrieren des Anlaufrings 40 auf der Zwischenwelle 30 geeignet ist. Das Dichtungselement 44 an der Innenfläche 43 ist bereits im ersten Verfahrensschritt 110 beim Anbringen des Anlaufrings 40 an der Zwischenwelle 40 dort positioniert. FIG 2 zeigt einen dritten Schritt 130 des beanspruchtem Verfahrens 100, in dem an einer Außenfläche 41 des Anlaufrings 40 zwei Dichtungselemente 44 angebracht werden. Die Dichtungselemente 44 sind jeweils in einer umlaufenden Nut 46 an der Außenfläche 41 des Anlaufrings 40 aufgenommen. In einer weiteren umlaufenden Nut 46 zwischen den Dichtungselementen 44 an der Außenfläche 41 ist ein Sicherungsring 45 aufgenommen, der auch im dritten Schritt 130 dort angebracht wird. Durch den Sicherungsring 45 ist eine Axialbewegung der Zwischenwelle 30 im montierten Zustand begrenzbar. Der Sicherungsring 45 ist zu einem Abstützen an der Ritzelhohlwelle 20 ausgebildet, durch das die Axialbewegung der Zwischenwelle 30, also entlang der Drehachse 15, eingeschränkt wird. Die Dichtungselemente 44 weisen, wie in FIG 2 dargestellt, in einem unbelasteten Zustand, einen Außendurchmesser 47 auf, der höher ist als der Innendurchmesser 34 der Ritzelhohlwelle 20. Die Dichtungselemente 44 an der Außenfläche 41 des Anlaufrings 40 sind elastisch verformbar ausgebildet.

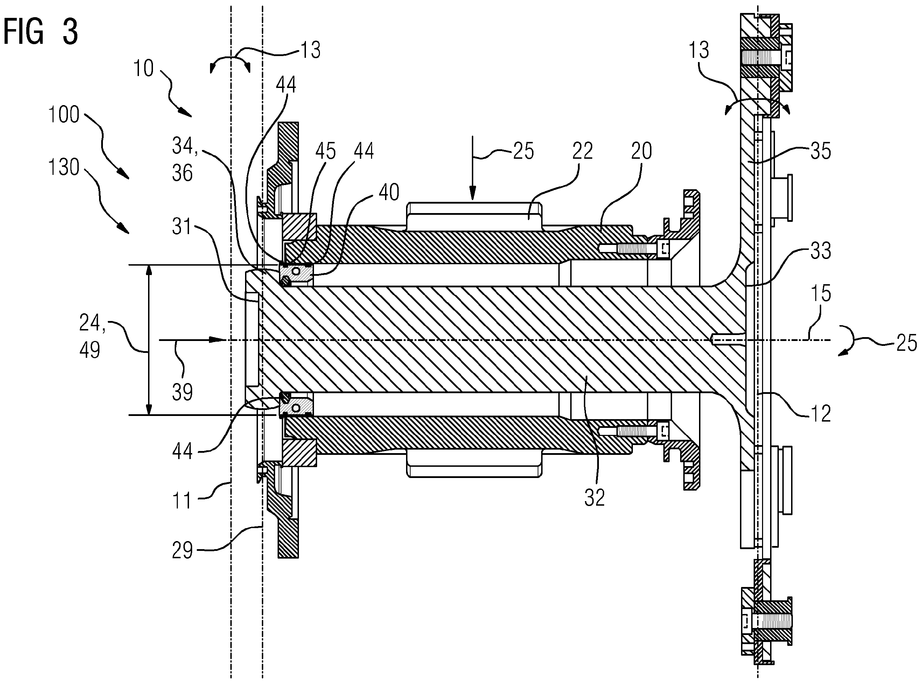

In FIG 3 ist die erste Ausführungsform der beanspruchten Doppelgelenkkupplung 10 in einem Längsschnitt ein einem Stadium, das im beanspruchten Verfahren 100 auf das Stadium nach FIG 2 folgt. FIG 3 geht davon aus, dass der dritte Schritt 130 soweit durchgeführt ist, dass an der Außenfläche 41 am Anlaufring 40 Dichtelemente 44 und ein Sicherungselement 45 angeordnet sind. Ferner wird im dritten Schritt 130 auf die Zwischenwelle 30 eine Axialkraft 39 zu einem Einpressen eines der Dichtungselemente 44 in die Ritzelhohlwelle 20 ausgeübt. Die Axialkraft 39 kann dabei als Druckraft am ersten Ende 31 der Zwischenwelle 30 oder als Zugkraft am zweiten Ende 33 der Zwischenwelle 30 ausgeübt werden. Der Anlaufring 40 wird durch die Kupplungsverzahnung 34 derart gedrückt, dass das einzupressende Dichtungselement 44 durch die Ritzelhohlwelle 20, also deren Wandung, komprimiert wird. Das Dichtungselement 44 liegt in einem belasteten Zustand vor, in dem der Außendurchmesser 49 des Dichtungselements 44 mit dem Innendurchmesser 24 der Ritzelhohlwelle 20 identisch ist. Dadurch wird eine Dichtwirkung erzielt, die ein Austreten von Betriebsstoffen aus dem Bereich der Kupplungsverzahnung in die Ritzelhohlwelle 20 verhindert. Dadurch wird der dritte Schritt 130 des beanspruchten Verfahrens 100 abgeschlossen.

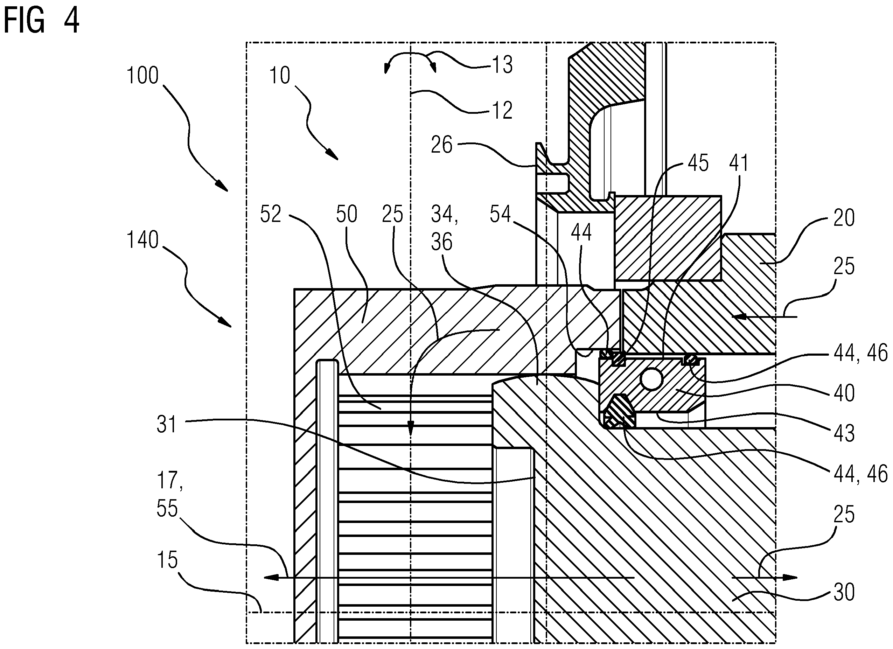

FIG 4 zeigt die erste Ausführungsform der beanspruchten Doppelgelenkkupplung 10 in einem Stadium des beanspruchten Verfahrens 100, das auf das Stadium in FIG 3 folgt. In FIG 4 ist in vierter Schritt 140 durchgeführt, in dem ein Mitnehmerring 50 im Bereich des ersten Endes 31 der Zwischenwelle 30 an der Ritzelhohlwelle 20 montiert wird. Der Mitnehmerring 50 weist eine Innenverzahnung 52 auf, die zu einem Eingriff mit der Kupplungsverzahnung 34 an der Zwischenwelle 30 ausgebildet ist. Die Kupplungsverzahnung 34 ist als Bogenverzahnung 36 ausgebildet, so dass bei einem Eingriff in die Innenverzahnung 52 entlang der Drehachse 15 betrachtet, die erste Gelenkebene 11 innerhalb des Mitnehmerrings 50 liegt. Insbesondere ist die Bogenverzahnung 36 dazu geeignet, eine Kippbewegung 13 in der Innenverzahnung 52 durchzuführen. Um den Eingriff der Kupplungsverzahnung 34 mit der Innenverzahnung 52 herzustellen, ist auf die Zwischenwelle 30 in Axialrichtung, also entlang der Drehachse 15, eine Axialkraft 17 auszuüben und so eine Positionierungsbewegung 55 der Zwischenwelle 30 hervorzurufen. Durch das Herstellen des Eingriffs wird eine Übertragung von Drehmoment 25 von der Ritzelhohlwelle 20 auf die Zwischenwelle 30 ermöglicht. Der Pfad der Übertragung des Drehmoments 25 ist in FIG 4 durch entsprechende Pfeile versinnbildlicht. Beim Befestigen der Mitnehmerrings 50 wird das Dichtungselement 44 am Anlaufring 40, das dem ersten Ende 31 der Zwischenwelle 30 zugewandt ist, durch den Mitnehmerring 50 komprimiert. Dementsprechend liegt auch zwischen dem Anlaufring 40 und der Mitnehmerring 50 eine Dichtung vor. Mit Durchführung des vierten Schritts 140 ist die Doppelgelenckupplung 10 im Wesentlichen montiert, also dazu geeignet, Drehmoment 25 von der Ritzelhohlwelle 20 auf die Zwischenwelle 30 zu übertragen. Demzufolge weist das in FIG 1 bis FIG 4 dargestellte Verfahren 100 eine geringe Anzahl an notwendigen Schritten 110, 120, 130, 140 auf, die schnell durchführbar sind. Die skizzierten Schritte 110, 120, 130, 140 sind ohne Weiteres umkehrbar um so ein komplementäres Demontageverfahren bereitzustellen.

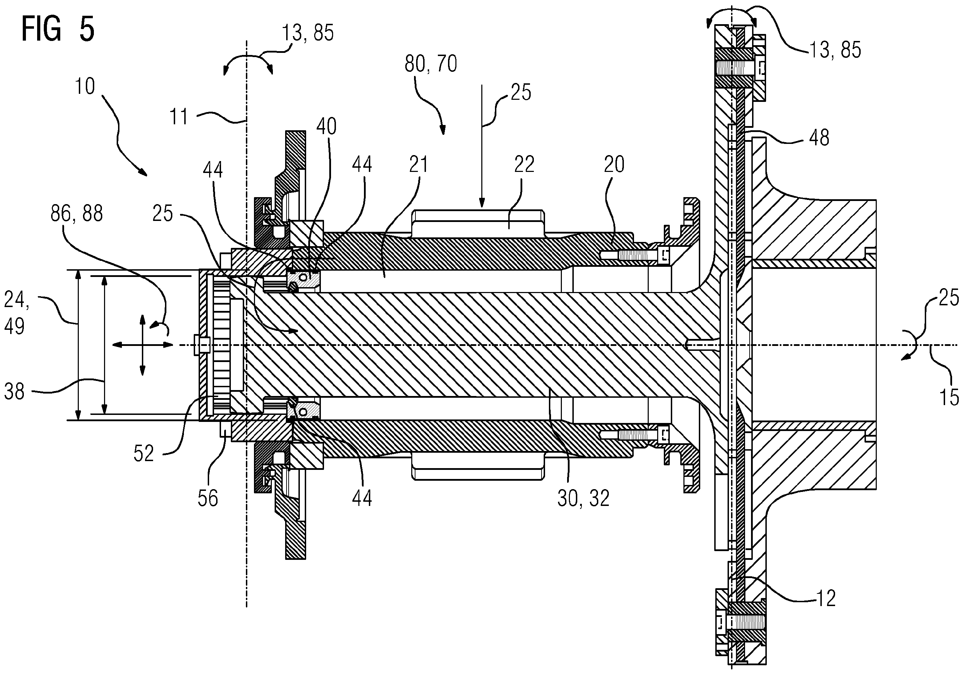

In FIG 5 ist die erste Ausführungsform der beanspruchten Doppelgelenkkupplung 10 im Längsschnitt im montierten Zustand dargestellt. Dabei ist der Mitnehmerring 50 mit Befestigungsmitteln 56, die als Schrauben ausgebildet sind, an der Ritzelhohlwelle 20 angebracht. Mittels der Kupplungsverzahnung 34, die in die Innenverzahnung 52 des Mitnehmerrings 50 eingreift, wird eine Übertragung von Drehmoment 35 von der Ritzelhohlwelle 20 in die Zwischenwelle 30 gewährleistet.

Dadurch, dass die Kupplungsverzahnung 34 als Bogenverzahnung 36 ausgebildet ist, wird dadurch die erste Gelenkebene 11 der Doppelgelenkkupplung 10 verwirklicht. Die zweite Gelenkebene 12 wird durch die Lamellenflansch 35 und die damit verbundenen Lamellenpakete verwirklicht. Die Kippbewegungen 13 bezogen auf die erste und zweite Gelenkebene 11, 12 definieren zumindest teilweise eine Kinematik 85 der Doppelgelenkkupplung 10. Die Kinematik 85 ist auch durch das Biegeverhalten der Lamellenpakete 48 beeinflusst. Ebenso wird die Kinematik 85 der Doppelgelenkkupplung 10 durch das Verformungsverhalten seiner Komponenten, beispielsweise einer Torsionssteifigkeit der Zwischenwelle 30 bezogen auf die Drehachse 15. Basierend auf zumindest einem Teil dieser Daten ist das statische und dynamische Verhalten der Doppelgelenkkupplung 10 abbildbar und simulierbar. Die Doppelgelenkkupplung 10 und ihre Kinematik 85 sind in einem Computerprogrammprodukt 80 derart gespeichert, dass eine Reaktion 88 der Doppelgelenkkupplung 10 auf eine vorgebbare Beanspruchung 86 ermittelbar ist. Sowohl die Beanspruchung 86 als auch die Reaktion 88 können Kräfte und Drehmomente umfassen, die zeitlich aufgelöst ermittelbar sind. Dem Computerprogrammprodukt 80 kann beispielsweise eine Beanspruchung 86 als Eingabe vorgegeben werden, durch die ein Fahrbetrieb eines nicht näher gezeigten Schienenfahrzeugs 70 abgebildet ist. Dementsprechend ist das Betriebsverhalten der Doppelgelenkkupplung 10 mittels des Computerprogrammprodukts 80 simulierbar.

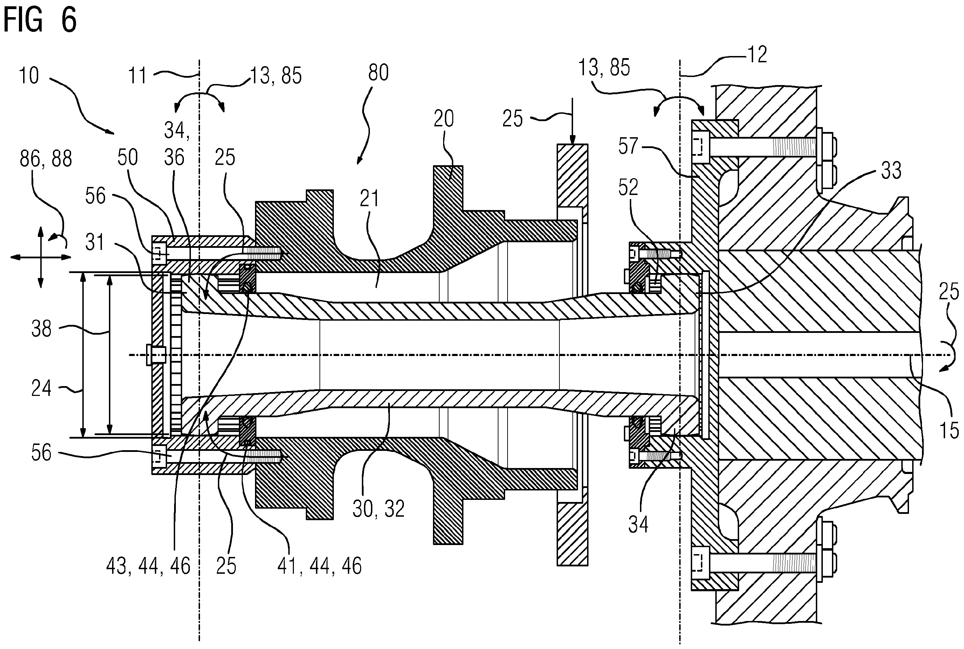

FIG 6 zeigt schematisch den Aufbau einer zweiten Ausführungsform der beanspruchten Doppelgelenkkupplung 10 im Längsschnitt. Die Doppelgelenkkupplung 10 weist eine Ritzelhohlwelle 20 auf, durch die eine Zwischenwelle 30 hindurchgeführt ist. Die Zwischenwelle 30 weist an einem ersten Ende 31, das einem Mitnehmerring 50 mit einer Innenverzahnung 52 zugewandt ist, eine Kupplungsverzahnung 34 auf, die als Bogenverzahnung 36 ausgebildet ist. Die Kupplungsverzahnung 34 ist dabei einstückig mit der Zwischenwelle 30 ausgebildet. Der Mitnehmerring 50 ist über Befestigungsmittel 56, die als Schrauben ausgebildet sind, lösbar mit der Ritzelhohlwelle 20 verbunden. Die Kupplungsverzahnung 34 weist einen Außendurchmesser 38 auf, der geringer ist als ein Innendurchmesser 24 eines Innenraums 21 der Ritzelhohlwelle 20. Die Bogenverzahnung 36 kämmt mit der Innenverzahnung 52 und ist bezogen auf eine Drehachse 15 der Doppelgelenkkupplung 10 kippbar ausgebildet. Eine dementsprechende Kippbewegung 13 am ersten Ende 31 der Zwischenwelle 30 definiert eine erste Gelenkebene 11 der Doppelgelenkkupplung 10. Ferner ist zwischen der Ritzelhohlwelle 20 und dem Mitnehmerring 50 ein Anlaufring 40 angeordnet, der an seiner Außenfläche 41 und seiner Innenfläche 43 jeweils mit mindestens einer Nut 46 versehen ist, in der ein Dichtungselement 44 aufgenommen ist. Das Anlaufring 40 ist im montierten Zustand zwischen dem Mitnehmerring 50 und der Ritzelhohlwelle 20 festgeklemmt. Durch die lösbare Verbindung zwischen dem Mitnehmerring 50 und der Ritzelhohlwelle 20 und dem Eingriff zwischen der Kupplungsverzahnung 34 am ersten Ende 31 der Zwischenwelle 30 und der Innenverzahnung 52 wird eine Übertragung von Drehmoment 25 auf die Zwischenwelle 30 ermöglicht. Die Übertragung des Drehmoments 25 ist in FIG 6 mit Pfeilen versinnbildlicht.

Die Zwischenwelle 30 ist als Hohlwelle ausgebildet und weist einen Wellenabschnitt 32 zwischen dem ersten Ende 31 und einem gegenüberliegenden zweiten Ende 33 auf. Am zweiten Ende 33 ist eine Kupplungsverzahnung 34 ausgebildet, die mit einer Innenverzahnung 52 einer weiteren Kupplungskomponente 57 kämmt. Dadurch wird am zweiten Ende 33 der Zwischenwelle 30 eine Kippbewegung 13 erlaubt, durch die eine zweite Gelenkebene 12 der Doppelgelenkkupplung 10 verwirklicht wird. Die Kippbewegungen 13 an der ersten und zweiten Gelenkebene 11, 12 gehören zu einer Kinematik 85 der Doppelgelenkkupplung 10, die durch ein entsprechendes Computerprogrammprodukt 80 simulierbar ist. Auch eine Verformung der gezeigten Komponenten, beispielsweise das Torsionsverhalten der Zwischenwelle 30, gehören zur Kinematik 85 der Doppelgelenkkupplung 10. Die Doppelgelenkkupplung 10 nach FIG 6 ist im nicht näher gezeigten Computerprogrammprodukt 80 abgebildet. Durch Eingabe einer Beanspruchung 86, die Kräfte und Drehmomente umfasst, ist das Computerprogrammprodukt 80 dazu ausgebildet, beispielsweise einen Fahrbetrieb eines Schienenfahrzeugs 70 zu simulieren und dabei eine Reaktion 88 der Doppelgelenkkupplung 10 zu simulieren. Die Reaktion 88 kann dabei auch Kräfte und Drehmomente umfassen.

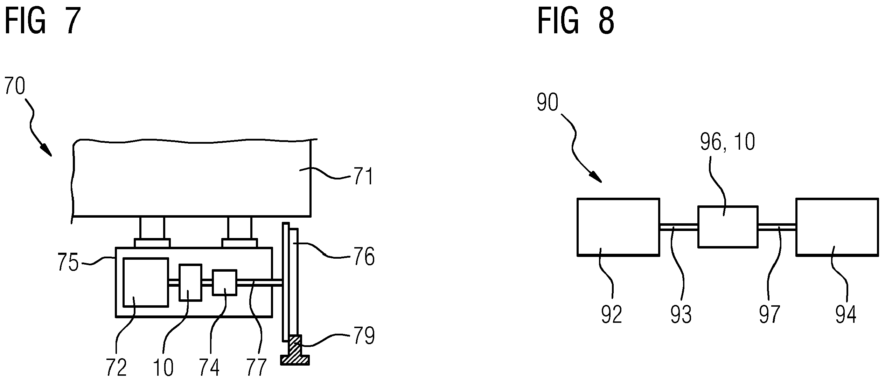

In FIG 7 ist schematisch der Aufbau einer Ausführungsform des beanspruchten Schienenfahrzeugs 70 dargestellt, das durch ein Rad 76 auf einer Schiene 79 fährt. Das Schienenfahrzeug 71 umfasst einen Wagenkasten 71, an dem ein Drehgestell 75 befestigt ist. Das Drehgestell 75 umfasst einen Fahrmotor 72, der drehmomentübertragend mit einer Doppelgelenkkupplung 10 verbunden ist. Die Doppelgelenkkupplung wiederum ist drehmomentübertragend mit einer einem Getriebe 74 verbunden, das wiederum drehmomentübertragend mit dem Rad 76 über eine Achse 77 gekoppelt ist. Die Doppelgelenkkupplung 10 ist gemäß einer der oben skizzierten Ausführungsformen ausgebildet.

Ferner zeigt FIG 8 einen schematischen Aufbau einer Ausführungsform der beanspruchten Industrie-Applikation 90, die eine Antriebseinheit 92 umfasst, die als Elektromotor, Verbrennungsmotor oder Hydraulikmotor ausgebildet sein kann. Durch die Antriebseinheit 92 wird über eine Ausgangswelle 93 eine Antriebsleistung bereitgestellt, die zur Abtriebseinheit 94 zu übertragen ist. Die Antriebseinheit 94 kann beispielsweise als Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse oder Schrottpresse ausgebildet sein. Die Abtriebseinheit 94 weist hierzu eine Eingangswelle 97 auf, die über eine Kupplung 96 mit der Ausgangswelle 93 der Antriebseinheit 92 verbunden ist. Die Kupplung 96 ist erfindungsgemäß als eine Doppelgelenkkupplung 10 nach einer der oben skizzierten Ausführungsformen ausgebildet.

## Patentansprüche

1. Doppelgelenkkupplung (10), umfassend eine Ritzelhohlwelle (20), die mit einer Innenverzahnung (52) verbunden ist, und eine Zwischenwelle (30), die mit einer Kupplungsverzahnung (34) zu einem Eingriff in die Innenverzahnung (52) verbunden ist, **dadurch gekennzeichnet , dass** die Kupplungsverzahnung (34) an der Zwischenwelle (30) zu einem Durchführen durch die Ritzelhohlwelle (20) ausgebildet ist.

2. Doppelgelenkkupplung (10) nach Anspruch 1, **dadurch gekennzeichnet , dass** die Kupplungsverzahnung (34) mit der Zwischenwelle (30) einstückig ausgebildet ist.

3. Doppelgelenkkupplung (10) nach Anspruch 1 oder 2, **da-durch gekennzeichnet**, dass in einem Bereich der Kupplungsverzahnung (34) an der Zwischenwelle (30) ein Anlaufring (40) angeordnet ist, der zu einem Durchführen durch die Ritzelhohlwelle (20) ausgebildet ist.

4. Doppelgelenkkupplung (10) nach Anspruch 3, **dadurch gekennzeichnet , dass** der Anlaufring (40) eine Außenfläche (41) aufweist, an der zumindest ein Dichtungselement (44) angeordnet ist.

5. Doppelgelenkkupplung (10) nach Anspruch 3 oder 4, **da-durch gekennzeichnet**, dass der Anlaufring (40) an einer Innenfläche (43) mittels zumindest eines Dichtungselements (44) an der Zwischenwelle (30) befestigbar ausgebildet ist.

6. Doppelgelenkkupplung (10) nach einem der Ansprüche 1 bis 3, **dadurch gekennzeichnet, dass** der Anlaufring (40) zu einem axialen Abstützen an der Ritzelhohlwelle (20) ausgebildet ist.

7. Doppelgelenkkupplung (10) nach einem der Ansprüche 1 bis 6, **dadurch gekennzeichnet , dass** der Mitnehmerring (50) lösbar mit der Ritzelhohlwelle (20) verbunden ist, oder der Mitnehmerring (50) einstückig mit der Ritzelhohlwelle (20) ausgebildet ist.

8. Doppelgelenkkupplung (10) nach einem der Ansprüche 1 bis 7, **dadurch gekennzeichnet, dass** die Zwischenwelle (30) einstückig mit einem Lamellenflansch (35) ausgebildet ist.

9. Doppelgelenkkupplung (10) nach einem der Ansprüche 1 bis 8, **dadurch gekennzeichnet, dass** die Zwischenwelle (30) als Hohlwelle ausgebildet ist.

10. Verfahren (100) zur Montage einer Doppelgelenkkupplung (10) mit einer Ritzelhohlwelle (20), einer Zwischenwelle (30) mit einer Kupplungsverzahnung (34), einem Anlaufring (40) und einem Mitnehmerring (50), umfassend die Schritte:
a) Bereitstellen der Ritzelhohlwelle (20);
b) Durchführen der Zwischenwelle (30) durch die Ritzelhohlwelle (20);
c) Anbringen von mindestens einem Dichtungselement (44) und/oder mindestens einem Sicherungselement (45) an einer Außenfläche (41) des Anlaufrings (40);
d) Befestigen eines Mitnehmerrings (50) mit einer Innenverzahnung (52) an der Ritzelhohlwelle (20) zu einem Eingriff mit der Kupplungsverzahnung (34).

11. Verfahren (100) nach Anspruch 10, **dadurch ge-kennzeichnet**, dass der Anlaufring (40) im Schritt a) an der Zwischenwelle (30) angebracht wird oder unmittelbar nach Schritt b).

12. Drehgestell (75) eines Schienenfahrzeugs (70), umfassend einen Fahrmotor (72), der drehmomentübertragend mit einer Doppelgelenkkupplung (10) verbunden ist, die über Getriebe (74) drehmomentübertragend mit einem Rad (76) und/oder einer Achse (77) verbunden ist, **dadurch gekenn- zeichnet**, dass die Doppelgelenkkupplung (10) nach einem der Ansprüche 1 bis 9 ausgebildet ist.

13. Schienenfahrzeug (70), umfassend ein Drehgestell (75), das an einem Wagenkasten (71) befestigt ist, **dadurch gekennzeichnet, dass** das Drehgestell (75) nach Anspruch 12 ausgebildet ist.

14. Industrie-Applikation (90), umfassend eine Antriebseinheit (92), die mit einer Abtriebseinheit (94) über eine Kupplung (96) drehmomentübertragend verbunden ist, **dadurch gekennzeichnet , dass** die Kupplung (96) als Doppelgelenkkupplung (10) nach einem der Ansprüche 1 bis 9 ausgebildet ist.

15. Computerprogrammprodukt (80) zur Simulation eines Betriebsverhaltens einer Doppelgelenkkupplung (10) in einem Schienenfahrzeug (70), **dadurch gekenn-zeichnet**, dass die Doppelgelenkkupplung (10) nach einem der Ansprüche 1 bis 9 ausgebildet ist.
